# EUROPEAN PATENT SPECIFICATION

(11) **EP 3 437 377 B1**
(45) Date of publication and mention of the grant of the patent: **20.04.2022**
(21) Application number: 17713932.6
(22) Date of filing: 27.03.2017
(51) Int. Cl.: H04W 36/30

(54) **VOICE SERVICE CLIENT DEVICE**
CLIENT-VORRICHTUNG FÜR SPRACHDIENST
DISPOSITIF CLIENT DE SERVICE VOCAL

(30) Priority: 31.03.2016 WO PCT/EP2016/163170
(43) Date of publication of application: 06.02.2019
(73) Proprietor: British Telecommunications public limited company, London E1 8EE (GB)
(72) Inventor: BROWN, Ruth, London EC4V 5BT (GB); GOMEZ, Alistair, London EC4V 5BT (GB); CUEVAS RAMIREZ, Maria, London EC4V 5BT (GB)
(74) Representative: British Telecommunications public limited company Intellectual Property Department
(86) International application number: PCT/EP2017/057204
(87) International publication number: WO 2017/167694

(56) References cited:
- EP-A2- 2 925 056
- WO-A2-2007/076147
- US-A1- 2005 059 400
- US-A1- 2009 046 655
- US-A1- 2012 315 905
- Norell L; Lundström A; Österlund H; Johansson H; Nilsson D: "Wi-Fi calling - extending the reach of VoLTE to Wi-Fi Wi-Fi calling - extending the reach of VoLTE to Wi-Fi", ERICSSON REVIEW, 30 January 2015 (2015-01-30), 30 January 2015 (2015-01-30), pages 1-4, XP055251865, Retrieved from the Internet: URL:https://www.ericsson.com/res/thecompan y/docs/publications/ericsson_review/2015/e r-wifi-calling.pdf

## Description

### Field of Invention

The present invention relates to wireless communication devices and in particular to a method and apparatus for operating a wireless device connectable to both WLAN and cellular services.

### Background

Cellular data networks provide data connectivity to mobile devices having cellular network interfaces. The network is formed of a network core for handling control plane functions and data packet routing, and a radio access network (RAN) of macrocell base stations located throughout the coverage area of the mobile network for wireless communication with subscriber mobile devices. An example of a cellular network architecture is Long Term Evolution (LTE). Unlike previous generation second generation (2G) and third generation (3G) cellular networks which offer packet switched data services on top of a circuit switched voice platform, LTE is an all-packet switched data network architecture that does not support the traditional voice calling platform.

Wireless local area networks (WLANs) operating in accordance with the IEEE 802.11 family of standards (commonly referred to as Wi-Fi) are common in many user locations and provide data connectivity over a short geographic range. Typically the wireless local area network is generated and maintained by a wireless access point which acts as a packet routing interface between devices connected to the WLAN (e.g. smartphones, tablets) and local devices connected via a wired interface (televisions, network attached storage). The wireless access point serves local devices and will typically be co-located, or integrated with an external network interface such as a modem for providing a backhaul link to external networks such as the Internet via an Internet Service Provider's core network. Example backhaul technologies include Digital Subscriber Line (xDSL) copper/fibre and cable based on the Data over Cable Service Interface Specifications (DOCSIS) architecture.

Such a combined WLAN, routing and modem device will be referred to as a hub throughout the description.

Both LTE and WLANs are examples of packet switched data networks in which application data is split into packets and the packets can take any path within the network to arrive at the receiver. In contrast the circuit switched networks require a dedicated data path to be established prior to sending data along the dedicated circuit.

### VoIP/VoLTE/VoWiFi

Voice over Internet Protocol (VoIP) applications are known for allowing voice communication via a packet switched network. The voice data is sampled into packets of voice data and the packets are sent over the data network.

VoIP applications are Over-The Top (OTT) services which typically require a user to generate a username identity and generally a VoIP call can only be established between two users having the same VoIP application on their mobile devices. Even where the VoIP application allows calls to conventional telephones and the caller information display shows the caller's telephone number, when the callee tries to return the call, the call is forwarded to the user's mobile, hence the call is received via the standard dialler and not the VoIP application.

Furthermore, in the VoIP service it is not possible to maintain a call if the mobile device moves out of range of the current access point and requires a handover from one access technology to another.

Voice over LTE (VoLTE) is a voice service running over LTE which uses optimised headers and priority marking to provide a voice service using the packet switched network with an aim to reducing/replacing the reliance on Circuit Switched Fall Back (CSFB) and VoIP services. This will reduce operating overheads and may allow parts of the legacy 2G and 3G platforms to be switched off.

Due to the prevalence of WLANs in many areas, the Voice over Wi-Fi (VoWiFi) or Wi-Fi Calling service has also been deployed by several network operators. In VoWiFi, the WLAN is regarded as a non-3^{rd} Generation Partnership Project (non-3GPP) access network base station to the LTE network so that voice calls are made and received using the standard telephony software and packet data is tunnelled to and from the cellular network core. VoWiFi therefore appear to extend the cellular network coverage to indoor locations where the cellular reception may be reduced. When the mobile device leaves the range of the WLAN and VoLTE is available, then at present the mobile device will register to a normal VoLTE service. It is expected that future implementations of VoWiFi will allow handovers from VoWiFi to VoLTE and VoLTE to VoWiFi.

Mobile devices such as smartphones will therefore have both a cellular network interface and a WLAN interface for data connectivity. Generally, the mobile device is configured to prefer the WLAN interface for all data connectivity when both WLAN and cellular access is available.

The Applicant's co-pending European applications EP 15187793.3 and EP15203278.5 provide methods for determining when a link between the hub and the VoWiFi service is disrupted or not available and instructing the mobile device to disconnect from VoWiFi. In this way the mobile device is forced to connect to VoLTE to maintain its connection to a Multimedia Telephony service (MMTel) voice service even if the mobile device's view is that the WLAN signal quality appears to be sufficient to support VoWiFi.

In those co-pending applications, the processing is based on monitoring the link to the VoWiFi service on behalf of the mobile devices so that the presence of a stable WLAN link is not the sole determinant in whether a mobile device should use VoWiFi or VoLTE.

However, the determination to switch away from VoWiFi does not consider any circumstances of the mobile device relative to the LTE link quality.

The present invention addresses the above problem.

The document US 2005/059400 A1 (JAGADEESAN RAMANATHAN T [US] ET AL), 17 March 2005 (2005-03-17), discloses a scheme for handing off a call between a WLAN and a cellular network. The procedure involves simultaneously monitoring the quality of a first link between a mobile station and the WLAN and the quality of a second link between the mobile station and a cellular network, when the mobile station is actively connected with the WLAN on a call. The call is handed off from the WLAN to the cellular network when the quality of the first link is less than a "trigger threshold for a drop count duration" and when the quality of the second link is greater than a minimum cellular link quality threshold.

### Statements of Invention

In one aspect, an embodiment of the present invention provides a method of operating a mobile device having a cellular network interface for connection to a cellular network and a wireless local area network interface for connecting to a wireless local area network, the device being connected to a voice service provided via a voice service gateway accessible via the wireless local area network interface, the method comprising: receiving a notification from a wireless access point connected to the device via the wireless local area network interface to disconnect from the voice service via the wireless local area network interface; determining whether the disconnection notification is generated due to network congestion to the voice service gateway via the wireless local area network interface; if it is determined that the disconnection notification is due to network congestion, determining a signal quality to said cellular network via said cellular network interface; comparing the determined signal quality against a predetermined threshold; and if the signal quality to the cellular network is below a predetermined threshold, maintaining the connection to the voice service via the wireless local area network and voice service gateway.

In another aspect, an embodiment of the present invention provides an Apparatus having a cellular network interface for connection to a cellular network and a wireless local area network interface for connecting to a wireless local area network, comprising: a voice service accessor for connecting to a voice service provided via a voice service gateway accessible via the wireless local area network interface; a receiver for receiving a notification from a wireless access point connected to the device via the wireless local area network interface to disconnect from the voice service via the wireless local area network interface; means for determining whether the disconnection notification is generated due to network congestion to the voice service gateway via the wireless local area network interface; means for determining a signal quality to said cellular network via said cellular network interface if it is determined that the disconnection notification is due to network congestion; means for comparing the determined signal quality against a predetermined threshold; and wherein the voice service accessor is configured to maintain the connection to the voice service via the wireless local area network and voice service gateway if the signal quality to the cellular network is below a predetermined threshold.

### List of Figures

Exemplary implementations of the present invention will now be described with the aid of the accompanying Figures in which:
Figure 1 schematically shows an overview of a telecommunications network;
Figure 2 schematically shows the behaviour of a hub and UE in the telecommunications network when a link to a VoWiFi service component is disrupted;
Figure 3 schematically shows the internal components of a hub;
Figure 4 schematically shows the components of a VoWiFi service monitor;
Figure 5 schematically shows the internal components of a user entity device; and
Figure 6 is a flowchart showing the operation of the user entity device in response to an instruction to de-register from VoWiFi.

### Description

### System overview

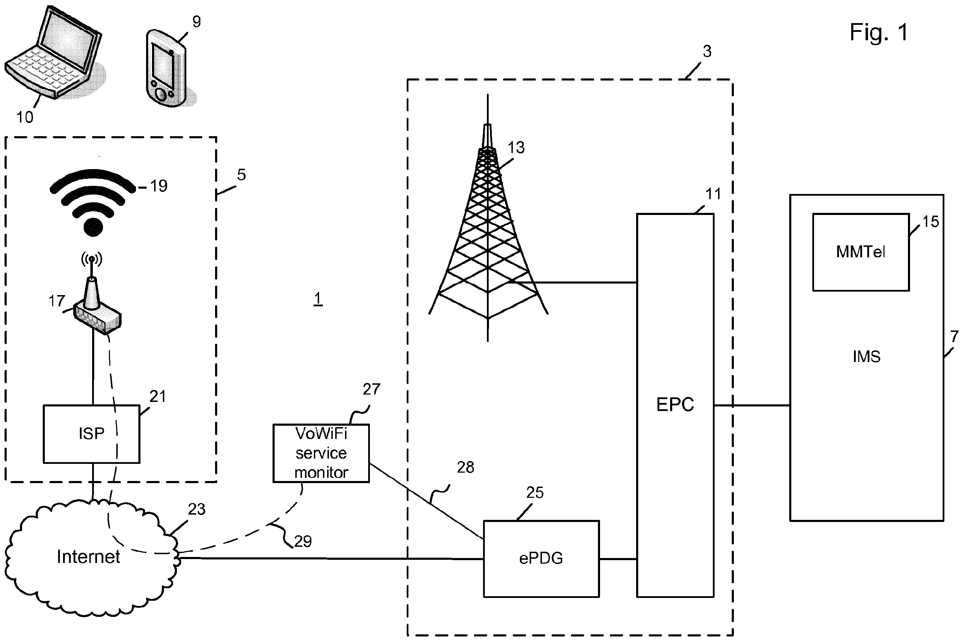

Figure 1 shows an overview of the main components in a telecommunications communication system 1. The system 1 has several functional subsystems:
a Long Term Evolution (LTE) cellular network 3 infrastructure;
non-cellular network infrastructure 5 including a local network and Internet Service Provider (ISP) architecture; and
an IP Multimedia Subsystem (IMS) 7.

The LTE cellular network 3 provides cellular network client devices, known as User Entities (UE) such as mobile telephones 9 with data and voice services using a packet-switched IP network in contrast to the older circuit switched networks. The LTE cellular network includes a network core 11 and a radio access network formed of eNodeBs 13 for connecting services and resources in the network core 11 to the UEs 9. The network core 11 contains the standard control functions such as a Multimedia Mobility Entity (MME) (not shown), a Home Subscriber Server (HSS) (not shown), and a Policy Configuration Rules Function (PCRF) (not shown). For routing data packets to remote resources, there are a number of Serving Gateways (SGW) (not shown) and Packet Gateways (PGW) (not shown).

The IMS 5 is an IP data network which provides a unified service architecture for all networks. Multiple services can be provided on a single control/service layer even though the access networks may be different. The IMS 7 therefore reduces the need for duplication in data services/applications. The VoLTE and VoWiFi voice calling services are hosted in an application server 15 within the IMS 7 which in this embodiment is provided by a service known as the Multimedia Telephony Service (MMTel).

The non-cellular network infrastructure 5 includes a wireless access point/modem router device 17, hereinafter referred to as a hub, located in the home generating a wireless local area network (WLAN) 19 in accordance with the IEEE 802.11 family of standards to allow communication with UEs 9 and also WLAN only devices such as a computer 10. For external network access, the hub 17 communicates with an Internet Service Provider (ISP) 21 which routes data via a wide area network such as the Internet 23 to external servers and users.

Due to the ability of the LTE cellular network 3 to use non-cellular access for applications such as Wi-Fi-Offload, the LTE cellular network 3 also includes an Evolved Packet Data Gateway (ePDG) 25 which acts as a termination point for IPSec tunnels with the UE over non-trusted 3GPP IP systems. This allows data into the EPC network core 11 for processing within the LTE cellular 3 and IMS 5 networks.

The system in Figure 1 also includes a VoWiFi service monitor 27 which is a network component maintained by the ISP or a third party. As shown in Figure 1, the VoWiFi service monitor has a data link 28 to the ePDG 25 and also a data link 29 to the hub 17. The VoWiFi service monitors whether the ePDG 25 is accessible, and therefore VoWiFi is available, on behalf of the hub 17 and informs the hubs of any changes in the accessibility of the ePDG 25 over time.

The UE 9 has both WLAN and LTE radio interfaces for accessing the non-cellular network infrastructure and the LTE cellular network respectively and the UE 9 supports VoLTE, VoWiFi and CSFB voice calls. To highlight the difference between UEs 9 and other connected WLAN devices 10, the computer 10 only has a WLAN interface and therefore can only access the WLAN 19 of the hub 17 but not the cellular network 3 since it does not have an interface capable of sending and receiving LTE signals.

### Behaviour of UE for activating Wi-Fi and LTE interfaces

As mentioned above, the UE 9 has both WLAN and LTE interfaces for connecting to both the WLAN and LTE networks. Furthermore it is capable of both VoLTE and VoWiFi call handling. Since an eNodeB 13 of the LTE network has a larger geographical coverage range than a WLAN 19, in general the UE will be connected to the LTE network 3 and will use VoLTE for voice services.

However, when the UE is within range of a WLAN 19 such as shown in Figure 1, there is overlap in the connectivity ranges, and the UE 9 could connect to data services using either the cellular interface or the WLAN interface. In general, the default policy is that a WLAN connection is preferred. So when a UE is connected to the LTE network and it detects a known WLAN, the UE will try to use the WLAN. Therefore upon detection of a known WLAN, the UE 9 will enable its WLAN interface and disable the cellular interface causing any existing services to also be disconnected. This change is generally transparent to the user of the UE as it has little impact to the operation of services such as file transfers and web browsing. However, the general UE policy of preferring WLANs to cellular data interfaces can have an impact on the Quality of Experience for users of voice services using VoWiFi instead of VoLTE. In particular, the VoWiFi service is only available when the UE 9 has a data link to the MMTel service 15 in the IMS 7 via the ePDG 25. If the ePDG 25 is not operational, then the UE cannot access the MMTel service and therefore will not be able to make and receive voice calls using VoWiFi.

In the exemplary implementation, the hub 17 is aware that some connected devices can use VoWiFi and so it uses information from the VoWiFi service monitor 27 regarding the accessibility of the ePDG 25, and therefore the availability of the VoWiFi service, to manage UEs access to VoWiFi.

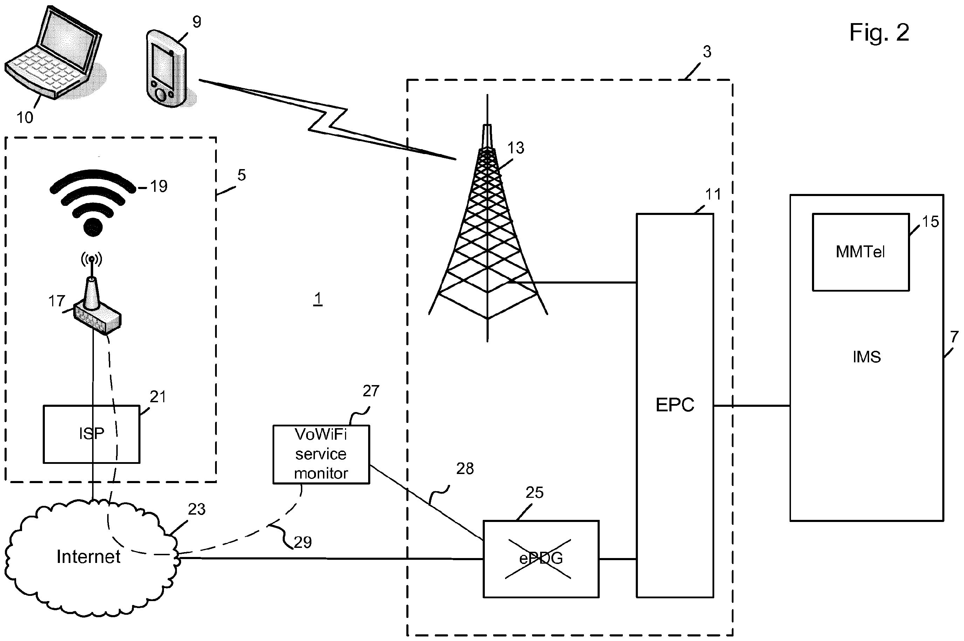

As shown in Figure 2, if the ePDG 25 loses service, the VoWiFi service monitor 27 will notice the loss of service for example because the logical data link 28 is down, and inform the hub 17 that the ePDG 25 is not available. With the new data, the hub 17 can then notify connected VoWiFi capable UEs 9 using the VoWiFi service that in order to maintain voice connectivity, the UEs 9 should disconnect from VoWiFi and register on VoLTE despite the WLAN 19 being available.

Additionally, if VoWiFi monitor service 27 determines that the data link 28 to the ePDG is operational but below a threshold throughput, perhaps due to congestion or overloading at the ePDG, then it may deduce that it will not be possible to maintain a reliable VoWiFi service. Therefore the hub can also notify connected VoWiFi capable UEs 9 using the VoWiFi service for that MNO that in order to maintain voice connectivity, the UEs 9 should disconnect from VoWiFi and register on VoLTE despite the WLAN 19 being available.

To differentiate between backhaul loss and potential loss of backhaul due to congestion, the VoWiFi monitor service 27 will append different status messages to the disconnection notification.

Since it is only the ePDG 25 or the link to the ePDG 28 which is determined to be inaccessible, the UE 9 may switch to VoLTE and LTE for all data services, or maintain both wireless connections so that LTE is used for VoLTE but all other data services use Wi-Fi.

The VoWiFi service monitor 27 constantly monitors the link to the ePDG and when the ePDG 25 or the connection to the ePDG 25 is restored, the hub 17 is notified so that it can instruct connected UEs 9 that registration on VoWiFi is available.

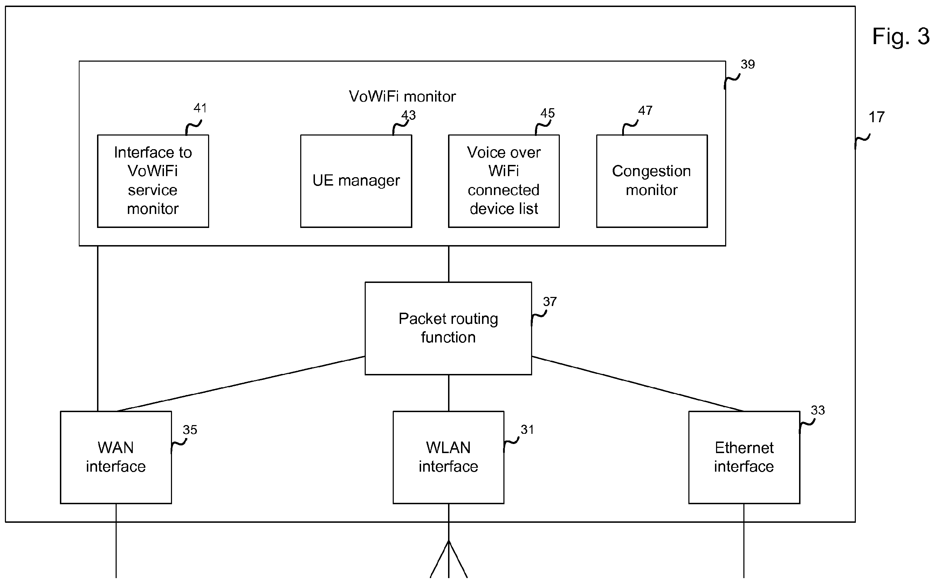

The components of the hub will now be described with reference to Figure 3.

Figure 3 shows the internal components of the hub 17 in more detail. The hub 17 contains a number of network interfaces for communication with various types of network device. For local devices, there is a Wireless Local Area Network (WLAN) interface 31 for communication with wireless devices using a wireless protocol such as the IEEE 802.11 family of wireless LAN standards known as Wi-Fi. In this embodiment, the WLAN interface 31 is compliant with the 802.11ac standard for WLAN operation. For wired LAN devices there is an Ethernet interface 33 in accordance with the IEEE 802.3 standards. For connectivity to the Internet Service Provider (ISP), the hub 17 has a Wide Area Network (WAN) interface 35 which in this exemplary implementation is a modem compliant with the Digital Subscriber Line (xDSL) family of standards such as Very High Speed DSL (VDSL) modem. In an alternative where the ISP is based on Data Over Cable Service Interface Specification (DOCSIS), the WAN interface 35 is a cable modem compliant with the DOCSIS cable standards.

The hub 17 also contains a packet routing function 37 which is responsible for managing the flow of data packets between the three interfaces 31, 33, 35. The packet routing function 37 processes the headers of incoming packets received on the three interfaces 31, 33, 35 and determines where to send the packets for onward delivery to the intended packet destination. The packet routing function 37 will also include functions such as Network Address Translation (NAT) for directing packets between the local interfaces 31, 33 and the WAN interface 35.

To process the information from the VoWiFi service monitor 27 and apply the information to connected UEs 9, the hub 17 contains a VoWiFi monitor function 39. This function is connected to the WAN interface 35 and the packet routing function 37 and is responsible for communication with the VoWiFi service monitor 27 to determine when UEs 9 would not be able to use VoWiFi and if required to notify the UEs 9 to switch to VoLTE.

The VoWiFi monitor function 39 contains an interface to the VoWiFi service monitor 41, a UE manager 43, a VoWiFi connected client list 45 and a congestion monitor 47.

The interface to the VoWiFi service monitor 41 is linked to the VoWiFi service monitor 27 via data link 29 to receive status information about the ePDG 25 of the MNO 3. The connected device list 45 contains the identity of any UEs 9 which are using the VoWiFi service. The connected device list 45 is a subset of the total population of devices connected to the WLAN. Whilst any WLAN capable device 9, 10 can connect to the hub 17 provided it has the relevant credentials, not every device will be VoWiFi capable. For example, certain smart phones have both VoLTE and VoWiFi capability, but older smartphones, laptops and computers will not be capable of supporting VoWiFi and therefore will not benefit from the processing of the first exemplary implementation. Furthermore, some smartphones may have the relevant hardware, but the service has not been enabled by their MNO. It is therefore important for the hub 17 to identify a set of VoWiFi capable UEs from the total population of connected UEs on the WLAN to reduce its processing load.

In this exemplary implementation, the hub 17 makes a passive determination of whether the device is operating a VoWiFi service by analysing the address information of data packets sent between UEs and external resources.

The VoWiFi monitor 39 retrieves a list of known ePDG addresses from an ePDG directory. The ePDGs are gateways to link Non-Trusted Non-3GPP networks to network operator EPCs and IMS services. The addresses of the ePDGs are publically known and therefore can be provided by the ISP 21 to the hubs 17 via a management service such as TR-069 or similar method for ISP 21 to hub 17 communication. Alternatively the VoWiFi service monitor 27 provides a list of ePDGs it is monitoring during a registration process by the hub.

The VoWiFi monitor 39 identifies VoWiFi capable UEs 9 from the total set of connected WLAN devices by analysing the IP Flows traversing the hub 17. In particular any IP Flows which have an ePDG gateway address as destination can be assumed to be an IP flow for VoWiFi traffic between a VoWiFi capable UE 9 and the MMTel voice service 15. If any such flows are present, the VoWiFi monitor 39 extracts the device information such as MAC address and saves a mapping between the UE 9 and the IP address of the ePDG of the subscriber MNO so that the hub 17 has a record of the subset of WLAN devices 9 which are VoWiFi capable and are using or have used the VoWiFi service to a known ePDG 25. Monitoring IP flows relies on the standard processing of a UE 9 which is capable of VoWiFi service to establish the IPSec tunnel to the ePDG 25 as soon as it connects to the WLAN 19 in order to register and/or handover to VoWiFi from VoLTE. Therefore devices which do not establish a connection to an ePDG are considered to be standard WLAN devices.

A congestion monitor 47 is responsible for monitoring the throughput of any VoWiFi data flows between VoWiFi capable UEs and the ePDG. The throughput is compared against a threshold minimum level and if any of the flows are found to be below this level, then the VoWiFi service may be disrupted in future.

The scanning process is periodically performed by the VoWiFi monitor 39 to maintain the validity of the connected client list 45 so that any new devices 9 that connect to or disconnect from the WLAN 19 are identified. In this embodiment, the scan is performed every 5 minutes.

Furthermore, in accordance with this exemplary implementation, the connection client list also contains entry fields for storing the status of the various ePDGs. The data is provided by the VoWiFi service monitor as will be described later.

The UE manager 43 is responsible for communicating with the VoWiFi capable UEs 9, details of which are stored in the connected client list, and especially to inform those UEs 9 when the ePDG is unavailable, when there may be congestion on the data link to the ePDG and also when the ePDG is available again after a service disruption.

Further details about the operation of the hub 17 and VoWiFi monitor function 39 will be described later once the other network components have been described.

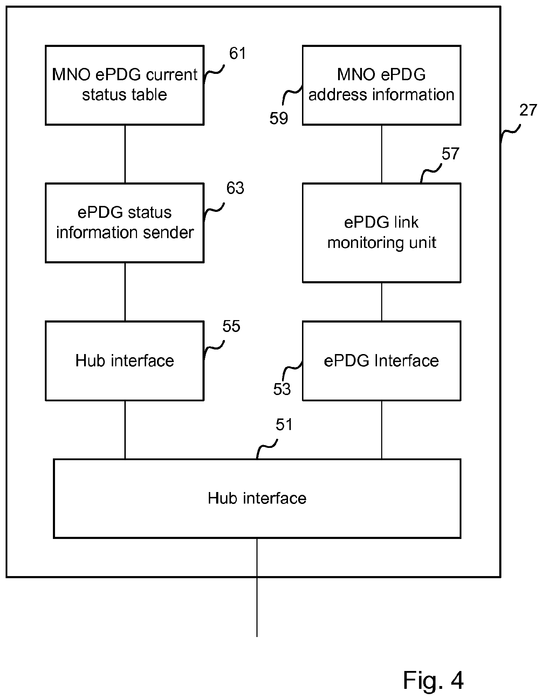

Figure 4 shows the functional components of the VoWiFi service monitor 27.

The VoWiFi service monitor 27 is configured as a server and contains a network interface 51 for external device communication. The network interface 51 can be divided into two main interfaces, an ePDG interface 53 for communication with the ePDGs 25 and a hub interface 55 for communication with the hubs 17.

An ePDG link monitoring unit 57 controls communication via the ePDG interface 53 which receives input from a MNO ePDG address information data store 59 which contains pre-stored IP address information for the location of each ePDG. In this exemplary implementation, the status of the ePDG is determined by Pinging the address of the ePDG. If each set in the ping is successfully transmitted and acknowledged, then the logical data to the ePDG is deemed to be an indication that the ePDG is functioning correctly. If the pings are lost, then a problem is assumed to have occurred at the ePDG and therefore the ePDG is deemed to be inaccessible.

A MNO ePDG current status table holds the information relating to the results of the ePDG status scan. An example of the contents of the MNO ePDG current status table is shown below. In the example all ePDGs for the set of MNOs are determined to be available.

**Table 1**

| MNO | ePDG Destination IP (via secure tunnel) | Logical Link state |
|---|---|---|
| 3a | MNO 3a ePDG server IP | UP |
| 3b | MNO 3b ePDG server IP | UP |
| 3c | MNO 3c ePDG server IP | UP |

In this exemplary implementation, the network availability of the ePDG associated with an MNO 3 is used as the indicator for whether the VoWiFi is/will be available to UEs 9. This is because the ePDG is the publicly addressable entry point to the MNO network. All VoWiFi traffic must travel via this network component between the MMTel service and any UEs 9 using VoWiFi. Therefore if access to the ePDG is disrupted then the VoWiFi service will not be available to any UEs 9.

The VoWiFi service monitor 27 is configured to monitor the logical network path between devices in the public network domain and the edge of the MNO network represented by the ePDG. Although the network paths will not be identical, if the VoWiFi network monitor 27 can establish contact with the ePDG, then other publically addressable devices such as the hub and UEs 9 should also be able to form a logical data path to the ePDG.

On the hub facing side of the VoWiFi service monitor 27, an ePDG status information sender is responsible for registering hubs subscribing to the monitoring service and using the data in the MNO ePDG current status table to notify registered hubs about ePDG status.

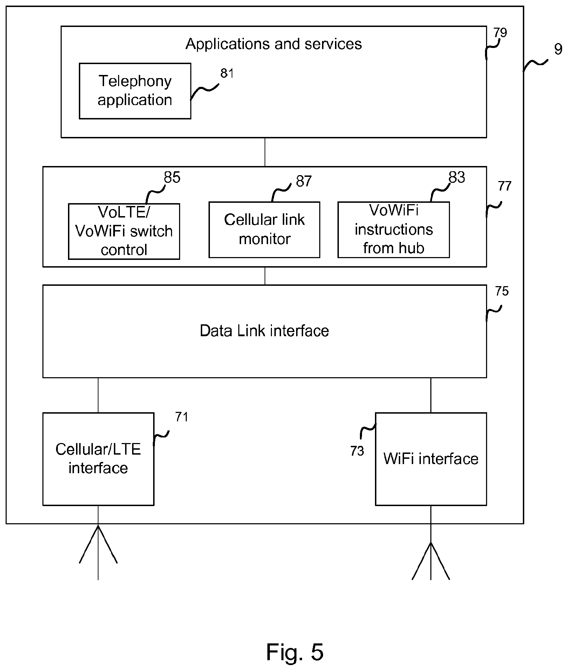

The components of the UE 9 will now be described with reference to Figure 5.

The UE 9 contains a cellular network interface 71 and a WLAN interface 73. The cellular interface 71 is compatible with the eNodeB 13 of the cellular network 3 and the WLAN interface 73 is compatible with the WLAN interface 31 of the hub 17.

Since either interface 71, 73, may be used by the UE 9, a data link interface 75 is responsible for enabling and disabling each interface 71, 73 as required and for routing user data and control packets to the interfaces 71, 73.

An operating system 77 is responsible for the overall operational tasks performed by the UE 9 and links a number of applications and services 79 to the data layer interface 75. One of the applications within the applications and services 79 is a telephony application 81 which is compatible with VoLTE and VoWiFi.

In normal operation, the telephony application 81 is configured to connect to the MMTel service 15 provided in the IMS 7 to provide voice services via VoLTE and VoWiFi. The UE 9 registers for VoWiFi when it is connected to a WLAN 19 and the UE 9 registers for VoLTE when it is connected to the LTE cellular network 3.

Within the operating system 77, the UE also has a receiver 83 for receiving instructions from the hub regarding VoWiFi connectivity, a VoLTE/VoWiFi switch control 85 for moving the telephony service from VoLTE from VoWiFi and from VoWiFi to VoLTE and a cellular link monitor 87 for monitoring the quality of the cellular link.

In the first exemplary implementation, the hub 17 issues instructions to the UE 9 to drop the VoWiFi connection and register to VoLTE when the VoWiFi service monitor 27 determines that the ePDG is disrupted or when the hub determines that there is a problem with the link to the ePDG due to congestion.

In the first exemplary implementation, the UE 9 may not immediately follow the instructions. Instead the VoLTE/VoWiFi switch control 85 controls the UE with regard to the cellular state and whether the ePDG 25 is disrupted or whether there is congestion.

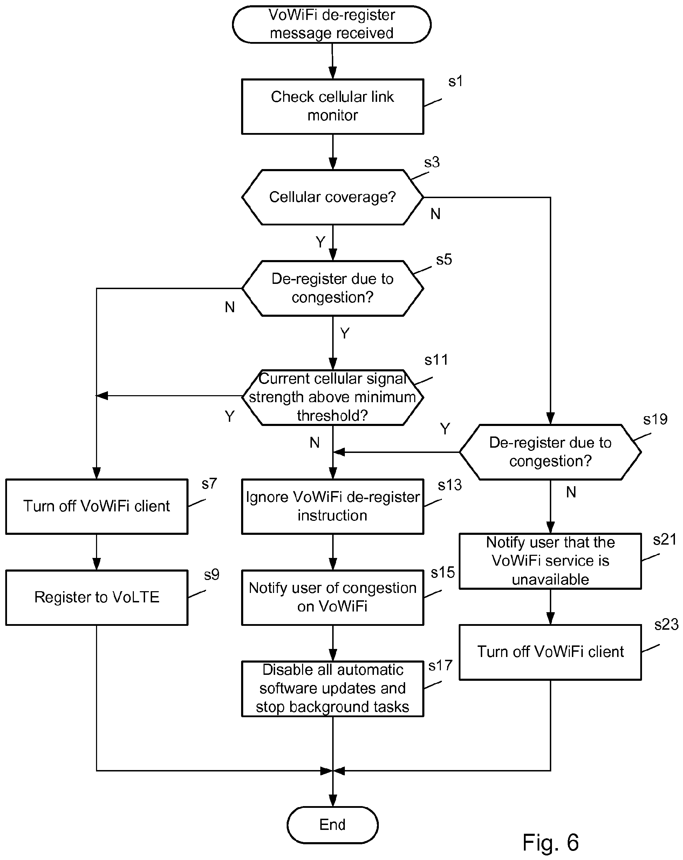

Figure 6 is a flowchart showing the operation of the VoLTE/VoWiFi switch control 85 in response to a message from the hub 17 to de-register from VoWiFi.

In step s1, the VoLTE/VoWiFi switch control 85 instructs the cellular link monitor 87 to temporarily test the connectivity to the UE's cellular network in terms of availability and signal strength measured in this embodiment as the Reference Signal Receive Power (RSRP) although other signal strength metrics can be used.

Having received the cellular link information, the VoLTE/VoWiFi switch control 85 considers four scenarios:
1) LTE available, ePDG unavailable and cellular signal available;
2) LTE available, ePDG available but congestion present;
3) LTE unavailable, ePDG available but congestion present; and
4) LTE unavailable, ePDG unavailable.

In step s3 the VoLTE/VoWiFi switch control 85 checks whether the LTE link is available, if it is then in step s5 VoLTE/VoWiFi switch control 85 analyses the de-registration notification from the hub 17 to determine whether the notification was issued due to congestion being present. If congestion was not present then scenario 1 is determined.

As a result of LTE being available but the ePDG being unavailable, in step s7 the VoLTE/VoWiFi switch control 85 follows the received instruction from the hub to de-register from VoWiFi and in step s9 the UE registers on VoLTE and then processing ends.

If during step s5 it is determined that the notification is due to congestion, then in step s11 the current cellular network signal strength is compared against a threshold which in this example is -120dBm. If the signal strength to the cellular network is above the threshold, for example -95dBm, the LTE signal is considered sufficiently strong to support VoLTE so processing moves to step s7 explained above to turn off the VoWiFi client to enable a registration to VoLTE in step s11 and then processing ends.

Alternatively, if in step s11 the signal strength is below the threshold, for example -130dBm, then the signal strength is deemed to be too low, so it is possible that a VoLTE session cannot be reliably maintained given the present location of the UE. Therefore processing moves to step s13 where the VoLTE/VoWiFi switch control 85 decides it is better to remain on VoWiFi and tolerate the congestion by ignoring the de-registration notification from the hub 17.

In step s15 the user is notified of the possible reduced service by way of a pop-up notification or status icon and to minimise disruption to the service, in step s17 the VoLTE/VoWiFi switch control 85 requests the OS to disable any automatic software updates and stop any background tasks before processing ends.

The scenarios where a cellular connection is not available will now be described. In step s3, if there is not cellular coverage, then in step s19 the notification from the hub 17 is checked to determine whether the cause was congestion. If the notification did indicate congestion, then processing moves to previously described steps s13 to s17 to ignore the de-registration instruction and stay on VoWiFi given the absence of a VoLTE connection and then processing ends.

If in step s19 the re-registration message indicates that there is no ePDG, then there is no ePDG or cellular connection and therefore there will be a temporary loss of service. In step s21 the user is notified of the disruption and in step s23 the VoWiFi client is turned off before processing ends.

With the above processing, the UE can more intelligently decide how to handle breaks in service to the VoWiFi service as notified by the hub. In particular, it can choose to ignore the instructions in dependence on the status of the cellular link to LTE and VoLTE. If it is likely that VoLTE will be impaired due to cellular reception issues, then the UE can choose to stay connected to VoWiFi.

The processing of Figure 6 relates to how the UE handles VoWiFi when a de-registration instruction is received. However in this exemplary implementation the UE 9 will maintain the WLAN connection so that other data services continue to travel via the WLAN interface and only the VoLTE service uses the LTE cellular connection.

Although there may be a battery penalty from enabling two wireless data connections simultaneously, the benefit is that only the VoLTE service is using LTE and therefore there is no disruption caused by a switch of network adaptor to other data services that may be active on the UE. Furthermore, most cellular subscribers to an MNO have data usage limits on the LTE service and therefore a transparent switch of all data services to LTE when the user believes they are on a WLAN (which is generally unmetered) would be a negative user experience.

Another benefit of maintaining the WLAN connection is that the hub will be able to send instructions to the UE that data connectivity to the ePDG has been restored or congestion has subsided.

When the UE receives such an instruction, it will handover to VoWiFi and disable the LTE interface to save power.

Insofar as exemplary implementations of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be implemented as source code or undergo compilation for implementation on a processing device, apparatus or system or may be implemented as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source implemented in a communications medium such as an electronic signal, radio frequency carrier wave or optical carrier wave. Such carrier media are also envisaged as aspects of the present invention.

It will be understood by those skilled in the art that, although the present invention has been described in relation to the above described exemplary implementations, the invention is not limited thereto.

## Claims

1. A method of operating a mobile device (9) having a cellular network interface (71) for connection to a cellular network (3) and a wireless local area network interface (73) for connecting to a wireless local area network (19), the device (9) being connected to a voice service provided via a voice service gateway (25) accessible via the wireless local area network interface (73), the method comprising:
receiving a notification from a wireless access point (17) connected to the device (9) via the wireless local area network interface (73) to disconnect from the voice service via the wireless local area network interface (73);
determining whether the disconnection notification is generated due to network congestion to the voice service gateway (25); via the wireless local area network interface (73);
if it is determined that the disconnection notification is due to network congestion, determining a signal quality to said cellular network (3) via said cellular network interface (71);
comparing the determined signal quality against a predetermined threshold; and
if the signal quality to the cellular network (3) is below a predetermined threshold, maintaining the connection to the voice service via the wireless local area network (19) and voice service gateway (25).

2. A method according to claim 1, further comprising:
disabling background processes operating on the mobile device to minimise data bandwidth while the connection to the voice service via the wireless local area network is maintained.

3. A method according to claim 1 or claim 2, further comprising modifying a display of the mobile device to indicate to a user that the connection to the voice service via the wireless local area network interface has been maintained.

4. A method according to any preceding claim, wherein if the signal quality to the cellular network is above a predetermined threshold, disconnecting from voice service via the wireless local area network connection and connecting to the voice service via the cellular network.

5. A method according to claim 4, wherein a set of non-voice data services operating on the cellular device continue to use the wireless local area network interface for communication with at least one remote server.

6. A method according to claim 4 or 5, further comprising:
receiving a notification to reconnect to the voice service via the wireless local area network interface; and
reconnecting to the voice service gateway via the wireless local area network interface.

7. Apparatus (9) having a cellular network interface (71) for connection to a cellular network (3) and a wireless local area network interface (73) for connecting to a wireless local area network (19), comprising:
a voice service accessor (77) for connecting to a voice service provided via a voice service gateway (25) accessible via the wireless local area network interface (73);
a receiver (83) for receiving a notification from a wireless access point (17) connected to the apparatus (9) via the wireless local area network interface (73) to disconnect from the voice service via the wireless local area network interface (73);
means (85) for determining whether the disconnection notification is generated due to network congestion to the voice service gateway (25) via the wireless local area network interface (73);
means (87) for determining a signal quality to said cellular network (3) via said cellular network interface (71) if it is determined that the disconnection notification is due to network congestion;
means (85) for comparing the determined signal quality against a predetermined threshold; and
wherein the voice service accessor (77) is configured to maintain the connection to the voice service via the wireless local area network (19) and voice service gateway (25) if the signal quality to the cellular network (3) is below a predetermined threshold.

8. Apparatus according to claim 7, further comprising means for disabling background processes operating on the mobile device to minimise data bandwidth while the connection to the voice service via the wireless local area network is maintained

9. Apparatus according to claim 7 or claim 8, further comprising a display operable to indicate to a user that the connection to the voice service via the wireless local area network interface has been maintained.

10. Apparatus according to any of claims 7 to 9, wherein if the signal quality to the cellular network is above a predetermined threshold, the voice service accessor is operable to disconnect from the voice service via the wireless local area network connection and connect to the voice service via the cellular network.

11. Apparatus according to claim 10, further comprising a set of non-voice data services and a network controller operable to cause the set of non-voice data services to continue to use the wireless local area network interface for communication with at least one remote server.

12. Apparatus according to claim 10 or 11, wherein the receiver is operable to receive a notification to reconnect to the voice service via the wireless local area network interface; and
the voice service accessor is operable to reconnect to the voice service gateway via the wireless local area network interface.

13. A computer program product storing processor executable instructions operable to cause a programmable processor to carry out the method according to claims 1 to 6.

## Patentansprüche

1. Verfahren zum Betreiben eines Mobilgeräts (9), das eine Mobilfunkschnittstelle (71) zum Verbinden mit einem Mobilfunknetz (3) und eine Schnittstelle (73) für ein drahtloses lokales Netz zum Verbinden mit einem drahtlosen lokalen Netz (19) aufweist, wobei das Gerät (9) mit einem Sprachdienst verbunden ist, der über ein Sprachdienst-Gateway (25) bereitgestellt wird, das über die Schnittstelle (73) für ein drahtloses lokales Netz zugänglich ist, wobei das Verfahren Folgendes umfasst:
Empfangen einer Benachrichtigung, sich von dem Sprachdienst über die Schnittstelle (73) für ein drahtloses lokales Netz zu trennen, von einem drahtlosen Zugangspunkt (17), der über die Schnittstelle (73) für ein drahtloses lokales Netz mit dem Gerät (9) verbunden ist,
Bestimmen, ob die Benachrichtigung zum Trennen wegen einer Netzüberlastung zu dem Sprachdienst-Gateway (25) über die Schnittstelle (73) für ein drahtloses lokales Netz erzeugt wurde,
wenn bestimmt wird, dass die Benachrichtigung zum Trennen wegen einer Netzüberlastung erzeugt wurde,
Bestimmen einer Signalqualität in das Mobilfunknetz (3) über die Mobilfunkschnittstelle (71),
Vergleichen der bestimmten Signalqualität mit einem festgelegten Grenzwert und
wenn die Signalqualität in das Mobilfunknetz (3) unter einem festgelegten Grenzwert liegt, Aufrechterhalten der Verbindung mit dem Sprachdienst über das drahtlose lokale Netz (19) und das Sprachdienst-Gateway (25).

2. Verfahren nach Anspruch 1, ferner Folgendes umfassend:
Deaktivieren von Hintergrundprozessen, die auf dem Mobilgerät laufen, um die Datenbandbreite zu minimieren, während die Verbindung mit dem Sprachdienst über das drahtlose lokale Netz aufrechterhalten wird.

3. Verfahren nach Anspruch 1 oder Anspruch 2, ferner das Modifizieren einer Anzeige des Mobilgeräts dahingehend umfassend, dass sie für einen Benutzer angibt, dass die Verbindung mit dem Sprachdienst über die Schnittstelle für ein drahtloses lokales Netz aufrechterhalten wurde.

4. Verfahren nach einem vorhergehenden Anspruch, wobei, wenn die Signalqualität in das Mobilfunknetz über einem festgelegten Grenzwert liegt, Trennen der Verbindung zum Sprachdienst über das drahtlose lokale Netz und Verbinden mit dem Sprachdienst über das Mobilfunknetz.

5. Verfahren nach Anspruch 4, wobei ein Satz von Nicht-Sprachdatendiensten, die auf dem Mobilgerät laufen, die Schnittstelle für ein drahtloses lokales Netz weiterhin zur Kommunikation mit mindestens einem Fernserver verwendet.

6. Verfahren nach Anspruch 4 oder 5, ferner Folgendes umfassend:
Empfangen einer Benachrichtigung zum Neuverbinden mit dem Sprachdienst über die Schnittstelle für ein drahtloses lokales Netz und
Neuverbinden mit dem Sprachdienst-Gateway über die Schnittstelle für ein drahtloses lokales Netz.

7. Vorrichtung (9), die eine Mobilfunkschnittstelle (71) zum Verbinden mit einem Mobilfunknetz (3) und eine Schnittstelle (73) für ein drahtloses lokales Netz zum Verbinden mit einem drahtlosen lokalen Netz (19) aufweist, Folgendes umfassend:
ein Sprachdienstzugangselement (77) zum Verbinden mit einem Sprachdienst, der über ein Sprachdienst-Gateway (25) bereitgestellt wird, das über die Schnittstelle (73) für ein drahtloses lokales Netz zugänglich ist,
einen Empfänger (83) zum Empfangen einer Benachrichtigung, sich von dem Sprachdienst über die Schnittstelle (73) für ein drahtloses lokales Netz zu trennen, von einem drahtlosen Zugangspunkt (17), der über die Schnittstelle (73) für ein drahtloses lokales Netz mit der Vorrichtung (9) verbunden ist,
Mittel (85) zum Bestimmen, ob die Benachrichtigung zum Trennen wegen einer Netzüberlastung zu dem Sprachdienst-Gateway (25) über die Schnittstelle (73) für ein drahtloses lokales Netz erzeugt wurde,
Mittel (87) zum Bestimmen einer Signalqualität in das Mobilfunknetz (3) über die Mobilfunkschnittstelle (71), wenn bestimmt wird, dass die Benachrichtigung zum Trennen wegen einer Netzüberlastung erzeugt wurde,
Mittel (85) zum Vergleichen der bestimmten Signalqualität mit einem festgelegten Grenzwert, und
wobei das Sprachdienstzugangselement (77) dafür konfiguriert ist, die Verbindung mit dem Sprachdienst über das drahtlose lokale Netz (19) und das Sprachdienst-Gateway (25) aufrechtzuerhalten, wenn die Signalqualität des Mobilfunknetzes (3) unter einem festgelegten Grenzwert liegt.

8. Vorrichtung nach Anspruch 7, ferner Mittel zum Deaktivieren von Hintergrundprozessen umfassend, die auf dem Mobilgerät laufen, um die Datenbandbreite zu minimieren, während die Verbindung mit dem Sprachdienst über das drahtlose lokale Netz aufrechterhalten wird.

9. Vorrichtung nach Anspruch 7 oder Anspruch 8, ferner eine Anzeige umfassend, die funktionsfähig ist, für einen Benutzer anzugeben, dass die Verbindung mit dem Sprachdienst über die Schnittstelle für ein drahtloses lokales Netz aufrechterhalten wurde.

10. Vorrichtung nach einem der Ansprüche 7 bis 9, wobei, wenn die Signalqualität in das Mobilfunknetz über einem festgelegten Grenzwert liegt, das Sprachdienstzugriffselement funktionsfähig ist, die Verbindung zum Sprachdienst über das drahtlose lokale Netz zu trennen und über das Mobilfunknetz mit dem Sprachdienst zu verbinden.

11. Vorrichtung nach Anspruch 10, ferner einen Satz von Nicht-Sprachdatendiensten und eine Netzsteuerung umfassend, die funktionsfähig ist zu veranlassen, dass der Satz von Nicht-Sprachdatendiensten die Schnittstelle für ein drahtloses lokales Netz weiterhin zur Kommunikation mit mindestens einem Fernserver verwendet.

12. Vorrichtung nach Anspruch 10 oder 11, wobei der Empfänger funktionsfähig ist, eine Benachrichtigung zum Neuverbinden mit dem Sprachdienst über die Schnittstelle für ein drahtloses lokales Netz zu empfangen, und
das Sprachdienstzugriffselement funktionsfähig ist, sich mit dem Sprachdienst-Gateway über die Schnittstelle für ein drahtloses lokales Netz neu zu verbinden.

13. Computerprogrammprodukt, das prozessorausführbare Anweisungen speichert, die funktionsfähig sind, einen programmierbaren Prozessor zu veranlassen, das Verfahren nach einem der Ansprüche 1 bis 6 auszuführen.

## Revendications

1. Procédé pour faire fonctionner un dispositif mobile (9) ayant une interface de réseau cellulaire (71) pour une connexion à un réseau cellulaire (3) et une interface de réseau local sans fil (73) pour se connecter à un réseau local sans fil (19), le dispositif (9) étant connecté à un service vocal fourni via une passerelle de service vocal (25) accessible via l'interface de réseau local sans fil (73), le procédé comprenant :
la réception d'une notification d'un point d'accès sans fil (17) connecté au dispositif (9) via l'interface de réseau local sans fil (73) pour se déconnecter du service vocal via l'interface de réseau local sans fil (73) ;
le fait de déterminer si la notification de déconnexion est générée dû à une congestion de réseau à la passerelle de service vocal (25) ; via l'interface de réseau local sans fil (73) ;
s'il est déterminé que la notification de déconnexion est due à une congestion de réseau,
le fait de déterminer une qualité de signal audit réseau cellulaire (3) via ladite interface de réseau cellulaire (71) ;
le fait de comparer la qualité de signal déterminée à un seuil prédéterminé ; et
si la qualité du signal au réseau cellulaire (3) est inférieure à un seuil prédéterminé,
le fait de maintenir la connexion au service vocal via le réseau local sans fil (19) et la passerelle de service vocal (25).

2. Procédé selon la revendication 1, comprenant en outre :
la désactivation de processus d'arrière-plan fonctionnant sur le dispositif mobile pour minimiser la largeur de bande de données tandis que la connexion au service vocal via le réseau local sans fil est maintenue.

3. Procédé selon la revendication 1 ou la revendication 2, comprenant en outre la modification d'un affichage du dispositif mobile pour indiquer à un utilisateur que la connexion au service vocal via l'interface de réseau local sans fil a été maintenue.

4. Procédé selon l'une quelconque des revendications précédentes, dans lequel si la qualité de signal du réseau cellulaire est supérieure à un seuil prédéterminé, la déconnexion du service vocal via la connexion de réseau local sans fil et la connexion au service vocal via le réseau cellulaire.

5. Procédé selon la revendication 4, dans lequel un ensemble de services de données non vocales fonctionnant sur le dispositif cellulaire continue d'utiliser l'interface de réseau local sans fil pour une communication avec au moins un serveur distant.

6. Procédé selon la revendication 4 ou la revendication 5, comprenant en outre :
la réception d'une notification pour se reconnecter au service vocal via l'interface de réseau local sans fil ; et
la reconnexion à la passerelle de service vocal via l'interface de réseau local sans fil.

7. Appareil (9) ayant une interface de réseau cellulaire (71) pour une connexion à un réseau cellulaire (3) et une interface de réseau local sans fil (73) pour se connecter à un réseau local sans fil (19), comprenant :
un dispositif d'accès de service vocal (77) pour se connecter à un service vocal fourni via une passerelle de service vocal (25) accessible via l'interface de réseau local sans fil (73) ;
un récepteur (83) pour recevoir une notification d'un point d'accès sans fil (17) connecté à l'appareil (9) via l'interface de réseau local sans fil (73) pour se déconnecter du service vocal via l'interface de réseau local sans fil (73) ;
un moyen (85) pour déterminer si la notification de déconnexion est générée dû à une congestion de réseau à la passerelle de service vocal (25) via l'interface de réseau local sans fil (73) ;
un moyen (87) pour déterminer une qualité de signal audit réseau cellulaire (3) via ladite interface de réseau cellulaire (71) s'il est déterminé que la notification de déconnexion est due à une congestion de réseau ;
un moyen (85) pour comparer la qualité de signal déterminée à un seuil prédéterminé ; et
dans lequel le dispositif d'accès de service vocal (77) est configuré pour maintenir la connexion au service vocal via la passerelle de service vocal de réseau local sans fil (19) et la passerelle de service vocal (25) si la qualité de signal du réseau cellulaire (3) est inférieure à un seuil prédéterminé.

8. Appareil selon la revendication 7, comprenant en outre un moyen pour désactiver les processus d'arrière-plan fonctionnant sur le dispositif mobile pour minimiser la largeur de bande de données tandis que la connexion au service vocal via le réseau local sans fil est maintenue.

9. Appareil selon la revendication 7 ou la revendication 8, comprenant en outre un affichage utilisable pour indiquer à un utilisateur que la connexion au service vocal via l'interface de réseau local sans fil a été maintenue.

10. Appareil selon l'une quelconque des revendications 7 à 9, dans lequel si la qualité de signal du réseau cellulaire est supérieure à un seuil prédéterminé, le dispositif d'accès de service vocal est utilisable pour se déconnecter du service vocal via la connexion de réseau local sans fil et se connecter au service vocal via le réseau cellulaire.

11. Appareil selon la revendication 10, comprenant en outre un ensemble de services de données non vocales et un dispositif de commande de réseau utilisable pour amener l'ensemble de services de données non vocales à continuer d'utiliser l'interface de réseau local sans fil pour une communication avec au moins un serveur distant.

12. Appareil selon la revendication 10 ou la revendication 11, dans lequel le récepteur est utilisable pour recevoir une notification pour se reconnecter au service vocal via l'interface de réseau local sans fil ; et
le dispositif d'accès de service vocal est utilisable pour se reconnecter à la passerelle de service vocal via l'interface de réseau local sans fil.

13. Produit de programme informatique stockant des instructions exécutables par processeur pouvant être utilisées pour amener un processeur programmable à mettre en œuvre le procédé selon les revendications 1 à 6.
